# FASCICULE DE BREVET EUROPEEN

(11) **EP 1 178 910 B1**
(45) Date de publication et mention de la délivrance du brevet: **12.11.2003**
(21) Numéro de dépôt: 00920821.6
(22) Date de dépôt: 18.04.2000
(51) Int. Cl.: B62D 1/04, B62D 15/02, G05G 5/05

(54) **DISPOSITIF DE RAPPEL AU POINT NEUTRE, EN PARTICULIER POUR VOLANT**
VORRICHTUNG ZUM ZURÜCKBRINGEN IN DIE NEUTRALE STELLUNG , INSBESONDERE EINES LENKRADES
NEUTRAL POINT SETTING DEVICE FOR STEERING WHEEL IN PARTICULAR

(30) Priorité: 19.04.1999 FR 9904901
(43) Date de publication de la demande: 13.02.2002
(73) Titulaire: SKF FRANCE, 78180 Montigny-le-Bretonneux (FR)
(72) Inventeur: LANDRIEVE, Franck, F-37230 Fondettes (FR)
(74) Mandataire: Casalonga, Axel
(86) Numéro de dépôt international: FR0000997
(87) Numéro de publication internationale: WO00063059

(56) Documents cités:
- DE-A- 19 510 717
- US-A- 2 656 178
- US-A- 5 050 443

## Description

La présente invention concerne le domaine des dispositifs de volant de manoeuvre utilisés en pur exemple pour la direction de véhicules automobiles, d'engins de manutention ou d'engins de travaux publics, ou de tous autres types d'engins nécessitant un volant de commande.

De façon classique, un volant de manoeuvre est relié à un axe, par exemple une colonne de direction, qui, suivant le type de direction utilisé, actionne directement en rotation le mécanisme de direction dans le cas d'une direction mécanique, des distributeurs dans le cas d'une direction hydraulique ou, enfin, dans le cas d'une direction électrique, actionne l'anneau codeur d'un dispositif de capteur délivrant un signal au moteur électrique de commande, des combinaisons de ces trois types étant possibles.

Dans le cas d'une direction uniquement électrique, de plus en plus couramment utilisée pour des engins de manutention tels que des chariots élévateurs, l'axe sert à lier le volant à l'engin par l'intermédiaire de roulements. Un système de détection de la rotation du volant, intégré ou non au roulement, délivre un signal représentatif de la rotation du volant à destination du dispositif d'orientation des roues du véhicule. On y ajoute généralement un système de freinage du volant destiné à générer dans celui-ci un couple résistant afin de favoriser la précision de la conduite du véhicule. Un dispositif de ce type est décrit dans le document DE-A-195 10 717.

Bien que techniquement satisfaisant, ce dispositif présente certains inconvénients d'encombrement axial et de coût en raison de la présence de deux roulements, d'un système de frein et du volant lui-même.

Dans la mesure où le volant n'a plus de liaison mécanique directe avec les organes qu'il commande, roues par exemple, on est amené à résoudre deux types de problèmes, d'une part la limitation du nombre de tours possibles effectués par le volant, d'autre part le retour automatique du volant au point neutre lorsque l'opérateur cesse de manoeuvrer le volant.

Il existe déjà des dispositifs de retour au point neutre, voir notamment les documents US 5050443 (servant de base au préambule de la revendication 1). NO 101790, mais adaptés à des systèmes commandés par un axe central, ce que l'on cherche précisément à éviter. De plus, ces dispositifs comportent un grand nombre de pièces et sont par conséquent onéreux à fabriquer.

La présente invention a pour objet de remédier aux inconvénients évoqués ci-dessus.

La présente invention a pour objet de proposer un mécanisme simple et compact de retour au point neutre, adapté à un volant de manoeuvre dépourvu d'axe central.

Le dispositif, selon l'invention, sert au rappel au point neutre d'un élément tournant. Le dispositif est du type comprenant deux ressorts en spirale destinés à appliquer un couple de rappel sur un élément tournant pour le ramener au point neutre, des moyens pour limiter dans deux directions la rotation de l'élément tournant, et un plateau monté à rotation par rapport à un élément fixe. Un premier ressort est disposé d'un coté du plateau et fixé sur celui-ci par son extrémité interne, un second ressort étant disposé de l'autre coté du plateau et fixé par son extrémité interne sur l'élément fixe, l'extrémité externe du premier ressort étant liée, dans un premier sens, à la rotation d'une bague tournante d'un palier à roulement pourvu d'une bague intérieure et d'une bague extérieure, l'une des bagues étant solidaire de l'élément fixe et l'autre bague étant solidaire de l'élément tournant et l'extrémité externe du second ressort étant liée, dans un deuxième sens opposé au premier, à la rotation du plateau. Avantageusement, le dit dispositif est de diamètre inférieur ou égal à l'encombrement du roulement, éventuellement à l'alésage de la bague intérieure du roulement.

Avantageusement, le dispositif comprend des premiers moyens d'entraînement de l'extrémité externe du premier ressort, les premiers moyens d'entraînement étant solidaires de la bague tournante, et des seconds moyens d'entraînement de l'extrémité externe du second ressort, les seconds moyens d'entraînement étant solidaires du plateau.

Avantageusement, le dispositif comprend un organe d'entraînement solidaire de la bague tournante et destiné à entraîner, dans un premier sens de rotation, le plateau par contact direct avec un organe d'appui dudit plateau, l'organe d'appui formant également butée pour l'arrêt en rotation de la bague tournante après sensiblement un tour dans le deuxième sens à partir du point neutre.

Dans un mode de réalisation de l'invention, les moyens d'entraînement du premier ressort sont constitués par l'organe d'entraînement solidaire de la bague tournante. L'organe d'entraînement solidaire de la bague tournante peut être un ergot radial.

Dans un autre mode de réalisation de l'invention, les moyens d'entraînement du premier ressort sont constitués par un trou dans lequel vient se loger l'extrémité externe du ressort.

Avantageusement, le plateau comprend, du coté du second ressort, un organe d'arrêt destiné à coopérer avec une butée de l'élément fixe pour limiter à sensiblement un tour la rotation du plateau lorsque ledit plateau est entraîné dans le premier sens de rotation et pour interdire la rotation dudit plateau à partir du point neutre dans le deuxième sens de rotation.

Dans un mode de réalisation de l'invention, les moyens d'entraînement du second ressort solidaires du plateau sont constitués par l'organe d'arrêt situé sur le plateau. L'organe d'arrêt situé sur le plateau peut être un ergot axial.

Dans un mode de réalisation de l'invention, le point d'ancrage de l'extrémité interne du deuxième ressort est situé sur un axe fixe solidaire de l'organe fixe.

De préférence, la rotation de la bague tournante dans le premier sens provoque la rotation du plateau et la mise sous contrainte du deuxième ressort par enroulement sans que le premier ressort ne subisse de modification de contrainte, tandis que la rotation de la bague tournante dans le deuxième sens provoque la mise sous contrainte du premier ressort par enroulement sans que le deuxième ressort ne subisse de modification de contrainte, le plateau étant empêché de tourner par l'organe d'arrêt venant en appui sur la butée de l'élément fixe.

Dans un mode de réalisation de l'invention, le second ressort est disposé axialement entre ledit plateau et l'élément fixe.

L'invention a également pour objet un système de volant, du type sans axe, fixé sur la bague tournante d'un palier à roulement pourvu d'un dispositif de rappel au point neutre.

Le dispositif de volant de manoeuvre avec retour au point neutre est particulièrement compact axialement par rapport au dispositif conventionnel. De plus, comme le palier à roulement peut avoir un diamètre important, supérieur à ceux utilisés de façon classique, tout en restant inférieur au diamètre du volant, et donc sans augmentation de l'encombrement radial, il est possible d'utiliser un capteur de forte résolution, le nombre d'impulsions délivrées par le codeur pour un angle de rotation donné, étant plus élevé que pour un codeur de faible diamètre.

Le grand diamètre du roulement permet d'y intégrer plus facilement un système simple de génération de couple de freinage, la force de freinage requise du système de génération étant inversement proportionnelle au diamètre pour un couple donné.

La zone centrale du volant dépourvue d'arbre plein, offre un espace libre qui peut être utilisé pour y loger des dispositifs annexes.

Enfin, ce dispositif de volant de manoeuvre s'adapte et se monte facilement en de nombreux emplacements possibles du véhicule, par exemple sur le tableau de bord, par l'intermédiaire du boîtier formant support. Quelques vis suffisent à la fixation du volant par l'intermédiaire du boîtier.

La présente invention sera mieux comprise et d'autres avantages apparaîtront à la lecture de la description détaillée d'un mode de réalisation pris à titre d'exemple nullement limitatif et illustré par les dessins annexés, sur lesquels :
- la figure 1 est une demi-vue en coupe axiale d'un dispositif de volant de manoeuvre conforme à l'invention;
- la figure 2 est une vue partielle de dessus en élévation, correspondant à la figure 1; et
- la figure 3 est une vue en coupe selon III-III de la figure 1.

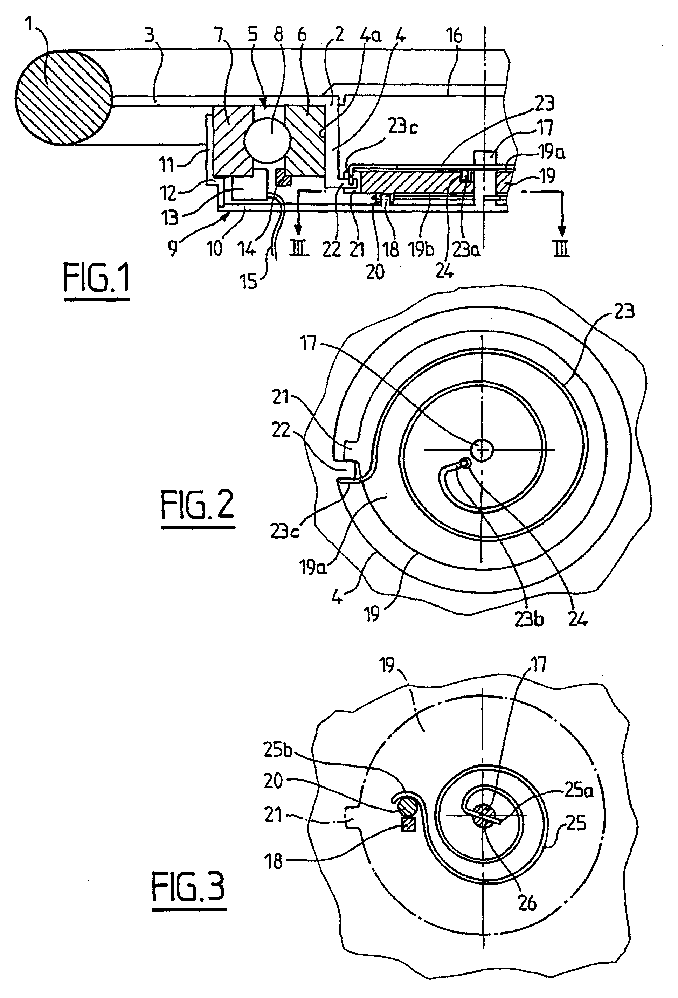

Comme on peut le voir sur la figure 1, le volant de direction comprend une partie de préhension 1 en forme de tore, solidaire d'une partie de support 2. La partie de support 2 présente une forme de coupelle avec une partie radiale 3 dont l'extrémité libre de grand diamètre supporte la partie de préhension 1, et une partie axiale 4 qui s'étend vers le bas à partir du bord intérieur de la partie radiale 3.

Le volant de manoeuvre comprend un palier à roulement 5 pourvu d'une bague intérieure tournante 6 massive, d'une bague extérieure non tournante massive 7, et d'une rangée d'éléments roulants 8, par exemple des billes disposées entre un chemin de roulement extérieur de la bague intérieure 6 et un chemin de roulement intérieur de la bague extérieure 7.

On pourrait prévoir une cage de maintien des éléments roulants 8. Toutefois, en raison de leur faible vitesse de rotation dans de telles applications, la présence de la cage n'est pas indispensable. La bague intérieure 6 est emmanchée sur la surface extérieure 4a de la partie axiale 4 de la partie de support 2 jusqu'au contact avec la partie radiale 3. En variante, on pourrait prévoir des bagues en tôle.

Le volant comprend également un boîtier fixe de support référencé 9. Le boîtier 9 comprend un fond radial 10 circulaire qui peut être percé de trous traversants prévus pour recevoir des vis de fixation sur la pièce prévue pour supporter le volant, par exemple le tableau de bord d'un véhicule ou d'un engin. Le boîtier 9 comprend également une partie axiale 11 dans l'alésage de laquelle la bague extérieure 7 du roulement 5 est emmanchée. La partie axiale 11 s'étend vers le haut à partir du bord circulaire extérieur du fond radial 10 du boîtier 9. Pour permettre un positionnement satisfaisant de la bague extérieure 7 par rapport à la partie axiale 11, on prévoit un redan 12 contre lequel ladite bague extérieure 7 vient en butée dans le sens axial.

Le palier à roulement 5 comprend un dispositif intégré de détection de la vitesse de rotation pourvu d'un capteur 13 solidaire de la bague extérieure 7 et un anneau codeur 14 solidaire de la bague intérieure 6. Ce dispositif de détection de la vitesse de rotation peut être de différents types, optique, magnétique, avec un capteur à effet Hall ou autre, etc. Le capteur 13 et le codeur 14 sont disposés axialement entre les éléments roulants 8 et le fond radial 10 du boîtier 9 et se trouvent de ce fait relativement bien protégés contre les agressions extérieures, la partie radiale 3 couvrant le dessus du palier à roulement 5.

Un câble de connexion 15 relie le capteur 13 à l'unité électronique, non représentée, apte à utiliser le signal électrique portant une information sur l'angle d'orientation du volant provenant dudit capteur 13. Le câble 15 traverse le fond 10 du boîtier.

Le volant de manoeuvre comprend, en outre, un capot 16 réalisé par exemple en matériau synthétique et qui vient se disposer sur la partie de support 2 à la jonction des parties radiale 3 et axiale 4, à l'opposé de la surface extérieure 4a. Le capot 16 présente la forme d'un disque circulaire ou, en variante non représenté, d'une couronne circulaire qui laisse libre un espace central à proximité de l'axe géométrique de rotation du volant.

Le fond 10 du boîtier 9 comprend un doigt axial 17 formant axe centré sur l'axe géométrique de rotation du volant et en saillie vers le haut à partir dudit fond 10, et une butée 18 sous la forme d'un pion axial également en saillie vers le haut et disposée radialement entre la partie axiale 4 de la partie de support 2 et le doigt 17, en étant plus proche de la partie axiale 4. Sur le doigt 17, est monté à rotation un plateau 19 de forme générale circulaire plane et de diamètre légèrement inférieur à celui de la partie axiale 4 de la partie de support 2 qui entoure le plateau 19 sur au moins une partie de son épaisseur. Le plateau 19 comprend une suface supérieure plane 19a et une surface inférieure 19b également plane. La surface inférieure 19b est située au-dessus de la butée 18 et est pourvue d'un ergot axial 20 orienté vers le bas et situé radialement à une distance par rapport à l'axe de rotation, telle que ledit ergot axial 20 soit capable d'entrer en contact avec la butée 18 lors de la rotation du plateau 19. Le plateau 19 est pourvu d'une protubérance radiale 21 apte à venir en contact avec un ergot radial 22 issu du bord inférieur libre de la partie axiale 4 de la partie de support 2 et orienté radialement vers l'intérieur.

Dans les positions illustrées sur les figures 1, 2 et 3, la protubérance 21 est en contact avec l'ergot radial 22, et l'ergot axial 20 est en contact avec la butée 18. A partir de cette position, on comprend qu'il est possible de tourner le volant 1 dans le sens horaire sur sensiblement un tour, en entraînant en rotation le plateau 19 jusqu'à ce que l'ergot 20 dudit plateau 19 entre en contact avec la butée 18. Dans le sens anti-horaire, on peut également tourner le volant 1 sur sensiblement un tour, sans entraîner le plateau 19, jusqu'à ce que l'ergot radial 22 entre en contact avec la protubérance 21 du plateau 19 dont l'ergot axial 20 est toujours en contact avec la butée 18 du boîtier 9.

Le dispositif comprend, en outre, deux ressorts. Un ressort supérieur 23 de type spirale est disposé sur la surface supérieure 19a du plateau 19. Le ressort 23 comprend une extrémité interne 23a pliée axialement vers le bas en étant disposée dans un trou 24 formé dans ladite surface supérieure 19a du plateau 19. Une portion sensiblement droite 23b située avant l'extrémité repliée 23a est solidarisée au plateau par des moyens appropriés de façon à être angulairement liée à la rotation du plateau. Le ressort 23 comprend une extrémité externe 23c qui fait saillie radialement par rapport au plateau 19 et qui est en contact avec l'ergot radial 22 du volant.

Le second ressort 25 est disposé sur la surface inférieure 19b du plateau 19. Le ressort 25 est de type spirale et comprend une extrémité de faible diamètre disposée dans un trou transversal 26 du doigt axial 17, et une extrémité de grand diamètre 25b en contact avec l'ergot axial 20 du plateau 19 du côté opposé à la butée 18, dans la position illustrée sur les figures 1 à 3.

A partir de la position neutre des figures 1 à 3, si l'on tourne le volant dans le sens horaire, l'ergot radial 22 du volant entraîne en rotation le plateau 19 par l'intermédiaire de la protubérance radiale 21. Le ressort 23 ne subit donc pas de modification et reste avec la légère précontrainte auquel on l'avait soumis lors de son montage. Au contraire, l'ergot axial 20 du plateau 19 n'est plus en contact avec la butée 18 et entraîne en rotation dans le sens horaire l'extrémité externe 25b du ressort 25 dont l'extrémité interne 25a est fixe dans le trou transversal 26 du doigt 17 du boîtier 9. Le ressort 25 est donc progressivement tendu jusqu'à ce que la rotation soit arrêtée, soit par l'opérateur ou soit par le contact entre l'ergot axial 20 (ou le cas échéant l'extrémité 25b du ressort 25) et la butée 18 au bout de sensiblement un tour.

Lorsque l'opérateur relâche le volant, le ressort 25 se détend et entraîne l'ergot axial 20 et donc le plateau 19 dans le sens anti-horaire jusqu'à retrouver la position illustrée sur la figure 3. Ce déplacement du plateau 19 dans le sens anti-horaire entraîne également un déplacement correspondant du volant dans le même sens en raison du contact entre la protubérance radiale 21 et l'ergot radial 22 du volant.

A partir de la position neutre illustrée sur les figures 1 à 3, lorsqu'un opérateur entraîne le volant en rotation dans le sens anti-horaire, l'ergot radial 22 du volant entraîne en rotation dans ledit sens anti-horaire l'extrémité externe 23c du ressort supérieur 23. Le plateau 19 tend également à se déplacer dans le sens anti-horaire mais est bloqué par le contact de l'ergot axial 20 sur la butée 18 du boîtier 9. Le plateau 19 reste donc immobile et le ressort 23 se tend. Dans le sens anti-horaire, la rotation maximale est limitée à sensiblement un tour, lorsque l'ergot radial 22 (ou le cas échéant l'extrémité 23c du ressort 23) entre en contact avec la protubérance 21 du plateau 19.

Lorsque l'opérateur relâche le volant, le ressort 23 se détend progressivement en entraînant l'ergot radial 22 et donc le volant dans le sens horaire, le plateau 19 restant immobile, son ergot axial 20 étant en contact avec la butée 18 du boîtier 9, comme on le voit sur la figure 3. Le ressort 23 tend donc à ramener le volant jusque dans la position illustrée sur les figures 1 à 3.

En d'autres termes, la rotation du volant dans un sens provoque la rotation du plateau et la mise sous contrainte de l'un des ressorts par enroulement sans que l'autre ressort ne subisse de modification de contrainte, tandis que la rotation du volant dans l'autre sens provoque la mise sous contrainte de l'autre ressort par enroulement sans que le premier ressort ne subisse de modifications de contrainte, le plateau étant empêché de tourner.

L'ergot radial 22 est donc apte à entraîner le plateau 19 en rotation dans un sens, à comprimer le ressort 23 lors d'une rotation dans l'autre sens et à venir en contact de butée de fin de course avec la protubérance radiale 21 du plateau 19 toujours dans l'autre sens.

L'ergot axial 20 situé sous la surface inférieure 19b du plateau 19 est apte à entraîner l'extrémité externe 25b du ressort inférieur 25 en le comprimant dans un sens jusqu'à venir en butée de fin de course sur la butée 18 du boîtier 9 et, dans l'autre sens, à rester en appui sur ladite butée 18.

Les ressorts 23 et 25 sont montés en opposition et sont légèrement précontraints, de façon qu'en position neutre l'ergot radial 22 du volant soit légèrement en appui sur la protubérance radiale 21 du plateau 19 et que l'ergot axial 20 du plateau 19 soit lui-même légèrement en appui sur la butée 18 du boîtier 9. Le volant est alors en position d'équilibre au point neutre. Ainsi, quel que soit le sens de rotation à partir du point neutre, si l'opérateur relâche le volant, le ressort ayant été comprimé restitue de l'énergie en se détendant et ramène le volant au point neutre. Le volant peut effectuer sensiblement un tour dans chaque sens et revenir de lui-même au point neutre.

Bien entendu, ce mode de réalisation n'est pas limitatif. On pourrait aussi obtenir les mêmes résultats en entraînant les extrémités de grand diamètre des ressorts par des moyens distincts des ergots ou des protubérances radiaux et axiaux, par exemple en introduisant l'extrémité externe du ressort supérieur dans un trou radial aménagé dans l'organe tournant, par exemple dans la partie axiale 4 et en solidarisant l'extrémité externe du ressort inférieur avec le fond 10 du boîtier 9. Les positions relatives de différents éléments peuvent être inversées sans modifier le fonctionnement du dispositif, et à ce titre de variante.

On obtient, grâce à l'invention, un ensemble très compact et simple de rappel au point neutre et de limitation du nombre de tours d'un volant, apte à être disposé dans la partie centrale d'un volant sans axe, l'encombrement radial du dispositif de rappel au point neutre lui permettant d'être monté dans l'espace radial libre à l'intérieur du volant et à l'intérieur du roulement, l'encombrement axial du dispositif de rappel au point neutre étant lui-même inférieur à l'encombrement axial du roulement. L'encombrement axial du dispositif de rappel au point neutre est suffisamment faible pour laisser un espace libre sous le capot 16 et permettre l'installation d'organes annexes.

Grâce à l'invention, on dispose d'un volant de direction économique, de faible encombrement axial et radial tout en laissant libre un espace central et en n'utilisant qu'un seul palier à roulement lui-même pourvu d'une unique rangée d'éléments roulants.

## Revendications

1. Dispositif de rappel au point neutre d'un élément tournant, du type comprenant deux ressorts en spirale destinés à appliquer un couple de rappel sur ledit élément tournant pour le ramener au point neutre, des moyens pour limiter dans deux directions la rotation de l' élément tournant, et un plateau (19) monté à rotation par rapport à un élément fixe (9), **caractérisé par le fait qu'**un premier ressort (23) est disposé d'un coté du plateau et fixé sur celui-ci par son extrémité interne, un second ressort (25) étant disposé de l'autre coté du plateau et fixé par son extrémité interne sur l'élément fixe, l'extrémité externe du premier ressort étant liée, dans un premier sens, à la rotation d'une bague tournante d'un palier à roulement (5) pourvu d'une bague intérieure (6) et d'une bague extérieure (7), l'une des bagues étant solidaire de l'élément fixe et l'autre bague étant solidaire de l' élément tournant et l'extrémité externe du second ressort étant liée, dans un deuxième sens opposé au premier, à la rotation du plateau.

2. Dispositif selon la revendication 1, **caractérisé par le fait qu'**il comprend des premiers moyens d'entraînement de l'extrémité externe du premier ressort (23), les premiers moyens d'entraînement étant solidaires de la bague tournante, et des seconds moyens d'entraînement de l'extrémité externe du second ressort (25), les seconds moyens d'entraînement étant solidaires du plateau (19).

3. Dispositif selon la revendication 1 ou 2, **caractérisé par le fait qu'**il comprend un organe d'entraînement (22) solidaire de la bague tournante et destiné à entraîner, dans un premier sens de rotation, le plateau par contact direct avec un organe d'appui (21) dudit plateau, l'organe d'appui formant également butée pour l'arrêt en rotation de la bague tournante après sensiblement un tour dans le deuxième sens à partir du point neutre.

4. Dispositif selon les revendications 2 et 3, **caractérisé par le fait que** les moyens d'entraînement du premier ressort sont constitués par l'organe d'entraînement (22) solidaire de la bague tournante.

5. Dispositif selon la revendication 4, **caractérisé par le fait que** l'organe d'entraînement solidaire de la bague tournante est un ergot radial (22).

6. Dispositif selon les revendications 2 et 3, **caractérisé par le fait que** les moyens d'entraînement du premier ressort sont constitués par un trou dans lequel vient se loger l'extrémité externe du ressort.

7. Dispositif selon l'une quelconque des revendications précédentes, **caractérisé par le fait que** le plateau (19) comprend, du coté du second ressort (25), un organe d'arrêt (20) destiné à coopérer avec une butée (18) de l'élément fixe pour limiter à sensiblement un tour la rotation du plateau lorsque ledit plateau est entraîné dans le premier sens de rotation et pour interdire la rotation dudit plateau à partir du point neutre dans le deuxième sens de rotation.

8. Dispositif selon les revendications 2 et 7, **caractérisé par le fait que** les moyens d'entraînement du second ressort (25) solidaires du plateau sont constitués par l'organe d'arrêt (20) situé sur le plateau.

9. Dispositif selon la revendication 8, **caractérisé par le fait que** l'organe d'arrêt situé sur le plateau (19) est un ergot axial (20).

10. Dispositif selon l'une quelconque des revendications précédentes, **caractérisé par le fait que** le point d'ancrage de l'extrémité interne du deuxième ressort (25) est situé sur un axe fixe (17) solidaire de l'organe fixe.

11. Dispositif selon l'une quelconque des revendications précédentes, **caractérisé par le fait que** la rotation de la bague tournante dans le premier sens provoque la rotation du plateau (19) et la mise sous contrainte du deuxième ressort (25) par enroulement sans que le premier ressort (23) ne subisse de modification de contrainte, tandis que la rotation de la bague tournante dans le deuxième sens provoque la mise sous contrainte du premier ressort (23) par enroulement sans que le deuxième ressort (25) ne subisse de modification de contrainte, le plateau étant empêché de tourner par l'organe d'arrêt (20) venant en appui sur la butée (18) de l'élément fixe.

12. Dispositif selon l'une quelconque des revendications précédentes, **caractérisé par le fait que** le second ressort(25) est disposé axialement entre ledit plateau et l'élément fixe.

13. Volant du type sans axe, **caractérisé par le fait qu'**il comporte un dispositif de rappel au point neutre selon l'une quelconque des revendications précédentes.

14. Volant sans axe suivant la revendication 13, **caractérisé par le fait que** le palier à roulement est équipé d'un dispositif de détection (13, 14) des paramètres de rotation.

## Patentansprüche

1. Vorrichtung zur Rückführung eines sich drehenden Elementes in die Totlage, wobei die Vorrichtung zwei Spiralfedern umfasst, die dazu bestimmt sind, ein Rückführungsmoment auf das sich drehende Element auszuüben, um es in die Totlage zurückzuführen, Mittel zur Begrenzung der Drehung des sich drehenden Elementes in zwei Richtungen sowie eine in Bezug auf ein feststehendes Element (9) drehmontierte Platte (19), **dadurch gekennzeichnet, dass** eine erste Feder (23) auf einer Seite der Platte angeordnet und auf dieser mit ihrem inneren Ende befestigt ist, wobei eine zweite Feder (25) auf der anderen Seite der Platte angeordnet ist und mit ihrem inneren Ende auf dem feststehenden Element befestigt ist, wobei das äußere Ende der ersten Feder in einer ersten Richtung mit der Drehung eines sich drehenden Ringes eines Rollenlagers (5) verbunden ist, das mit einem Innen- und Außenring (6,7) versehen ist, wobei einer der Ringe mit dem feststehenden Element und der andere Ring mit dem sich drehenden Element einstückig verbunden ist und wobei das äußere Ende der zweiten Feder in einer zweiten, der ersten Richtung entgegengesetzten Richtung mit der Drehung der Platte verbunden ist.

2. Vorrichtung nach Anspruch 1, **dadurch gekennzeichnet, dass** die Vorrichtung erste Antriebsmittel für das äußere Ende der ersten Feder (23) umfasst, wobei die ersten Antriebsmittel mit dem sich drehenden Ring einstückig verbunden sind, sowie zweite Antriebsmittel für das äußere Ende der zweiten Feder (25), wobei die zweiten Antriebsmittel mit der Platte (19) einstückig verbunden sind.

3. Vorrichtung nach Anspruch 1 oder 2, **dadurch gekennzeichnet, dass** die Vorrichtung ein mit dem sich drehenden Ring einstückiges Antriebsorgan (22) umfasst, das dazu bestimmt ist, die Platte in einer ersten Rotationsrichtung durch direkten Kontakt mit einem Stützorgan (21) der Platte anzutreiben, wobei das Stützorgan ebenfalls einen Anschlag zum Anhalten während der Rotation des rotierenden Rings nach im wesentlichen einer Umdrehung in der zweiten Richtung ab der Totlage bildet.

4. Vorrichtung nach Anspruch 2 oder 3, **dadurch gekennzeichnet, dass** die Antriebsmittel der ersten Feder aus dem mit dem sich drehenden Ring einstückig verbundenen Antriebsorgan (22) bestehen.

5. Vorrichtung nach Anspruch 4, **dadurch gekennzeichnet, dass** das mit dem sich drehenden Ring einstückig verbundene Antriebsorgan ein radialer Dorn (22) ist.

6. Vorrichtung nach Anspruch 2 oder 3, **dadurch gekennzeichnet, dass** die Antriebsmittel der ersten Feder aus einem Loch bestehen, in dem das äußere Ende der Feder gelagert ist.

7. Vorrichtung nach einem der vorstehenden Ansprüche, **dadurch gekennzeichnet, dass** die Platte (19) auf der Seite der zweiten Feder (25) ein Anhalteorgan (20) umfasst, das dazu bestimmt ist, mit einem Anschlag (18) des feststehenden Elements zusammenzuwirken, um die Drehung der Platte auf im wesentlichen eine Umdrehung zu begrenzen, wenn die Platte in der ersten Drehrichtung mitgenommen wird, und um die Drehung der Platte ab der Totlage in der zweiten Drehrichtung zu verhindern.

8. Vorrichtung nach Anspruch 2 oder 7, **dadurch gekennzeichnet, dass** die Antriebsmittel der zweiten, mit der Platte einstückigen Feder (25) aus dem auf der Platte gelegenen Anhalteorgan (20) bestehen.

9. Vorrichtung nach Anspruch 8, **dadurch gekennzeichnet, dass** das auf der Platte (19) gelegene Anhalteorgan ein axialer Dorn (20) ist.

10. Vorrichtung nach einem der vorstehenden Ansprüche, **dadurch gekennzeichnet, dass** der Verankerungspunkt des inneren Endes der zweiten Feder (25) auf einer mit dem feststehenden Organ einstückigen feststehenden Achse (17) gelegen ist.

11. Vorrichtung nach einem der vorstehenden Ansprüche, **dadurch gekennzeichnet, dass** die Rotation des sich in der ersten Richtung drehenden Rings die Rotation der Platte (19) und die Beanspruchung der zweiten Feder (25) durch Windung erzeugt, ohne dass die erste Feder (23) einer Belastungsveränderung unterliegt, während die Rotation des sich in der zweiten Richtung drehenden Rings die Beanspruchung der ersten Feder (23) durch Windung erzeugt, ohne dass die zweite Feder (25) einer Belastungsänderung unterliegt, wobei die Platte durch das sich auf den Anschlag (18) des feststehenden Elementes aufstützende Anhalteorgan (20) daran gehindert wird, sich zu drehen.

12. Vorrichtung nach einem der vorstehenden Ansprüche, **dadurch gekennzeichnet, dass** die zweite Feder (25) axial zwischen der Platte und dem feststehenden Element angeordnet ist.

13. Achsfreies Steuerrad, **dadurch gekennzeichnet, dass** das Steuerrad eine Vorrichtung zur Rückführung in die Totlage nach einem der vorstehenden Ansprüche aufweist.

14. Achsfreies Steuerrad nach Anspruch 13, **dadurch gekennzeichnet, dass** das Rollenlager mit einer Vorrichtung zur Erfassung (13, 14) der Rotationsparameter ausgestattet ist.

## Claims

1. Device for returning to the neutral point a rotating element of the type comprising two spiral springs intended to apply a return torque to the said rotating element so as to return it to the neutral point, means for limiting, in both directions, the rotation of the rotating element, and a plate (19) mounted so that it can rotate with respect to a fixed element (9), **characterized in that** a first spring (23) is arranged on one side of the plate and fixed to the latter by its inner end, a second spring (25) being arranged on the other side of the plate and fixed by its inner end to the fixed element, the outer end of the first spring being connected, in a first direction, to the rotation of a rotating race of a rolling bearing (5) provided with an inner race (6) and with an outer race (7), one of the races being secured to the fixed element and the other race being secured to the rotating element and the outer end of the second spring being connected, in a second direction opposite to the first, to the rotation of the plate.

2. Device according to Claim 1, **characterized in that** it comprises first means for driving the outer end of the first spring (23), the first drive means being secured to the rotating race, and second means for driving the outer end of the second spring (25), the second drive means being secured to the plate (19).

3. Device according to Claim 1 or 2, **characterized in that** it comprises a drive member (22) secured to the rotating race and intended to drive the plate in a first direction of rotation by direct contact with a bearing member (21) of the said plate, the bearing member also forming a stop for stopping the rotation of the rotating race after approximately one revolution in the second direction from the neutral point.

4. Device according to Claims 2 and 3, **characterized in that** the means for driving the first spring consist of the drive member (22) secured to the rotating race.

5. Device according to Claim 4, **characterized in that** the drive member secured to the rotating race is a radial lug (22).

6. Device according to Claims 2 and 3, **characterized in that** the means of driving the first spring consist of a hole in which the outer end of the spring becomes lodged.

7. Device according to any one of the preceding claims, **characterized in that** the plate (19) comprises, on the same side as the second spring (25), a stop member (20) intended to collaborate with a stop (18) of the fixed element so as to limit to approximately one revolution the rotation of the plate when the said plate is driven in the first direction of rotation and to prevent the said plate from rotating from the neutral point in the second direction of rotation.

8. Device according to Claims 2 and 7, **characterized in that** the means of driving the second spring (25) which are secured to the plate consist of the stop member (20) situated on the plate.

9. Device according to Claim 8, **characterized in that** the stop member situated on the plate (19) is an axial lug (20).

10. Device according to any one of the preceding claims, **characterized in that** the anchoring point for the inner end of the second spring (25) is on a fixed pin (17) secured to the fixed member.

11. Device according to any one of the preceding claims, **characterized in that** the rotating of the rotating race in the first direction causes the plate (19) to rotate and causes the second spring (25) to become stressed by winding up without the first spring (23) undergoing any change in stress, while rotating the rotating race in the second direction causes the first spring (23) to become stressed by winding up without the second spring (25) undergoing any change in stress, the plate being prevented from rotating by the stop member (20) coming to bear against the stop (18) of the fixed element.

12. Device according to any one of the preceding claims, **characterized in that** the second spring (25) is arranged axially between the said plate and the fixed element.

13. Wheel of the shaftless type, **characterized in that** it comprises a device for returning to the neutral point according to any one of the preceding claims.

14. Shaftless wheel according to Claim 13, **characterized in that** the rolling bearing is equipped with a device (13, 14) for detecting rotation parameters.
